# EUROPEAN PATENT APPLICATION

(11) **EP 1 052 588 A2**
(43) Date of publication of application: **15.11.2000**
(21) Application number: 00303903.9
(22) Date of filing: 09.05.2000
(51) Int. Cl.: G06F 19/00, A63F 13/12

(54) **Ranking service system for on-line games and a method therefor**

(30) Priority: 10.05.1999 KR 1665799
(71) Applicant: Battle Top Co., Ltd., Kangnam-gu, Seoul (KR)
(72) Inventor: Lee, Kang Min, Kwanak-gu Seoul (KR)
(74) Representative: Mounteney, Simon James

(57) **Abstract**

Disclosed is a ranking service system for on-line games and a method therefor for indicating records of gamers who enjoy on-line games. The ranking service system registers a user as a member based on a membership entry request from the user, registers competition start requests of plural users to user databases, respectively, based on user data inputted from registered users as members, registers users' competition results to the user databases, respectively, based on competition result data from the plural users, and controls users' s rankings based on the result. Accordingly, since a game opponent can be selected with reference to a competition state, a percentage of victories, ranking, and so on, a game can be carried out with his/her own level together with an enhanced interest and accomplishment with respect to the game.

## Description

### BACKGROUND OF THE INVENTION

### 1. Field of the Invention

The present invention relates to a ranking service system for on-line games and a method therefor, and more particularly to a ranking service system for on-line games and a method therefor, capable of providing a ranking service for showing records of gamers who enjoy games on-line.

### 2. Description of the Prior Art

In recent years, on-line games, which are carried out between gamers through the internet, personal computer communications, or the like, are widely popularized.

Such on-line games can be carried out at home by gamers, but many gamers are recently enjoying on-line games in on-line game business places where personal computers accessible to the internet are provided and open to the public for a commercial purpose.

For example, the game called ' STARCRAFT',which is world-widely popularized, can be carried out by plural gamers through a connection to the so-called 'battlenet' server provided for STRARCRAFT game services by using a communication device such as a modem.

Further, in case of games for which the battlenet is not supported, the games are generally carried out by using a communication network such as the internet.

However, in the games as stated above, gamers are simply satisfied with playing the games without objective ranking services providing an integrated evaluation for gamers' s ranking.

Accordingly, gamers have difficulties in selecting a proper opponent to enjoy games suitable to a level of their own as well as have not so high a satisfaction in enjoying games.

### SUMMARY OF THE INVENTION

In order to solve the above problems, it is an object of the present invention to provide a ranking service system for on-line games capable of providing a ranking service for showing records of gamers who enjoy games on-line.

It is another object of the present invention to provide a ranking service method for on-line games capable of providing a ranking service for showing records of gamers who enjoy games on-line.

In order to achieve the above objects, a ranking service system for on-line games comprises a database part for storing data of plural users and outputting a user data signal corresponding in response to a data readout signal from an external, a data input/output part for providing the data readout signal to the database part in response to the data readout control signal from the external, and for outputting the user data signal inputted from the database part in response to the data readout signal, a comparison part for inputting the user data signal from the data input/output part. inputting a data signal from the external, comparing the user data signal with the data signal in response to a data comparison control signal from the external, and for outputting a comparison signal, and a control part for outputting the data readout control signal and the data comparison control signal to the data input/output part and the comparison part, respectively, in response to the data signal inputted by an operation of the user, applying the data signal to the comparison part, and for outputting a result signal indicating a comparison result to the user in response to the comparison signal of the comparison part.

In order to achieve the above object, a ranking service method for on-line games according to the present invention comprises steps of: (I) registering a user as a member based on a membership entry request from the user; (ii) registering competition start requests of plural users to user databases, respectively, based on user data inputted from registered users as members; (iii) registering users' competition results to the user databases, respectively, based on competition result data from the plural users carried out through the step(ii); and (iv) controlling users' s rankings based on a result of the step(iii).

With the above ranking service system for on-line games and a method therefor, a service such as a chatting room and the like can be provided for each game in finding out game levels, present ranking, the percentage of victories, and game states of gamers. Accordingly, since a competition opponent gamer suitable for a game can be easily selected with reference to his percentage of victories as well as ranking, a gamer can play a game suitable for his game level with enhanced interests and achievements in the game.

### BRIEF DESCRIPTION OF THE DRAWINGS

The above objects and other advantages of the present invention will become more apparent by describing in detail a preferred embodiment thereof with reference to the attached drawings, in which:
FIG. 1a and FIG. 1b are views for explaining concepts of a network structure of a ranking service system for on-line games according to an embodiment of the present invention;
FIG. 2 is a view for showing a database structure of a ranking service system for on-line games according to an embodiment of the present invention;
FIG. 3 is a block diagram for showing a structure of a ranking service system for on-line games according to an embodiment of the present invention;
FIG. 4 is a flow chart for explaining a ranking service method for on-line games according to an embodiment of the present invention;
FIG. 5a and FIG. 5b are flow charts for explaining a competition start registration steps of a ranking service method for on-line games according to an embodiment of the present invention;
FIG. 6a and FIG. 6b are flow charts for explaining a competition start registration steps of a ranking service method for on-line games according to an embodiment of the present invention;
FIG. 7 is a view for showing a menu display for a competition start registration by using a ranking service system for on-line games according to an embodiment of the present invention; and
FIG. 8 is a view for showing a menu display for a competition result registration by using a ranking service system for on-line games according to an embodiment of the present invention.

### DETAILED DESCRIPTION OF THE PREFERRED EMBODIMENTS

Hereinafter, a ranking service system for on-line games and a method therefor according to an embodiment of the present invention will be described in detail with reference to the accompanying drawings.

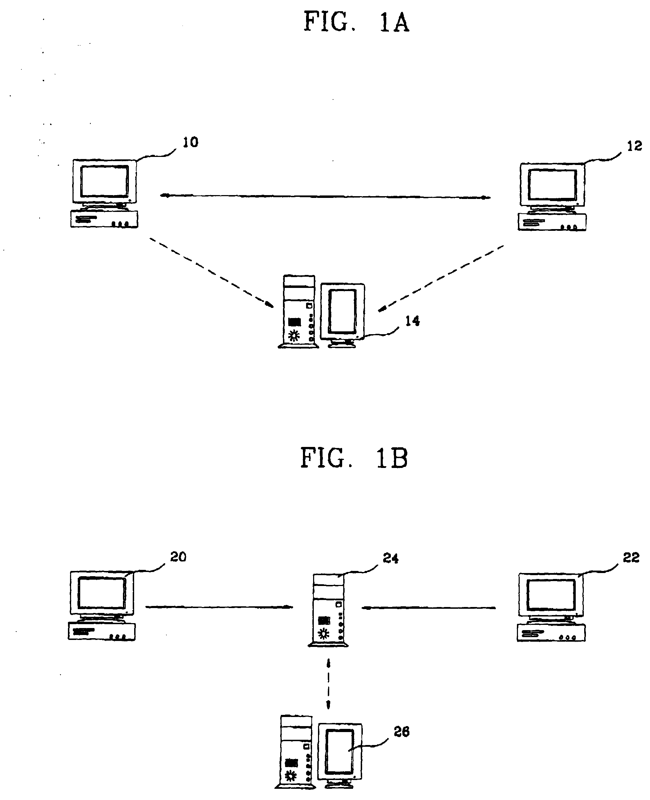

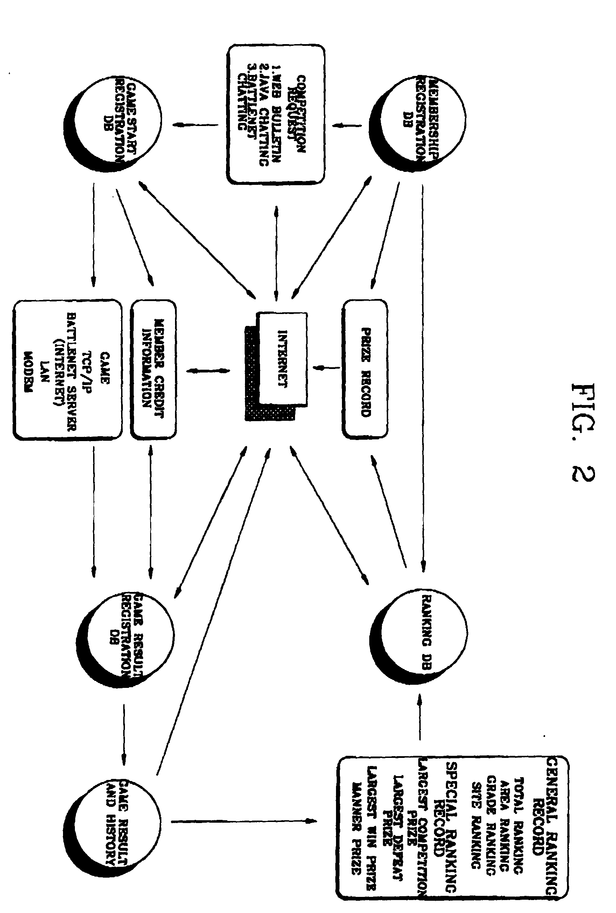

FIG. 1a and FIG. 1b are views for explaining concepts of a network structure of a ranking service system for on-line games according to an embodiment of the present invention. FIG. 1a is a view for showing a network structure which does not support a battlenet server, and FIG. 2 is a view for showing a network structure which supports the battlenet server.

In FIG. 1a, the first and second gamers 10 and 12 select a component gamer suitable for each other in a chatting room provided in a ranking server and carry out a competition start registration, to immediately enjoy a game by using the Internet.

In FIG. 1b, the first and second gamers 10 and 12 select a component gamer suitable for each other in the chatting room provided in the ranking server and carry out a competition start registration, connect the battlenet server to carry out a game, and register competition result information in the ranking server, to reflect the ranking.

Such selections of opponent gamers is generally performed through a web bulletin board of a web server, a chatting room of a chat server, a chatting room of the battlenet, or a chatting room of a ranking server, or opponent gamers can be found out by setting time at which a gamer wants to play a game through a bulletin board shown in Table 1 as below.

**Table 1**

| ID | Level | Title | time | date | hit times |
|---|---|---|---|---|---|
| she | 10 | seeking a gamer | 1:00 pm | 02-05-99 | 14 |
| sarumi | 6 | playing | 3:30 am | 02-05-99 | 3 |
| fifabavo | 10 | starcraft | 2:50 pm | 02-05-99 | 10 |
| dovesim | 9 | complete beginner | 9:40 pm | 01-05-99 | 18 |
| GOSES | 3 | 1:1 novice | 10:40 am | 02-05-99 | 21 |
| europa | 9 | competition, contact me | 8:30 am | 03-05-99 | 7 |
| kisses | 3 | a game with me ... | 10:00pm | 05-05-99 | 15 |
| Mvwav | 9 | want a game | 3.10 am | 02-05-99 | 11 |

FIG. 2 is a view for showing a database structure of a ranking service system for on-line games according to an embodiment of the present invention.

As shown in FIG. 2, a database in the ranking service system for on-line games according to an embodiment of the present invention includes a membership database, a game start registration database, a game result registration database, a ranking database, and a game result history database.

At this time, the ranking database is composed of total ranking, area ranking, class ranking, site ranking, and so on. Further, games are carded out through the TCP/IP, the battlenet server, a local area network(LAN), a modem, or the like. Furthermore, as shown in Table 2 below, the ranking database supports gamer Ids, names, battle records, percentages of victories, credit standings, membership classifications, and the like.

**Table 2**

| rank | ID | names | battle record | percentage of victories | credit standing (%) | belong to |
|---|---|---|---|---|---|---|
| 107 | Insia | Koindo | 9 battles | 50 | 92 | semi-member |
| | | | 5 wins | | | |
| | | | 5 defeats | | | |
| | | | 9/5/5 | | | |
| 115 | MAGICI | songsar | 4/4/0 | 100 | 80 | dongam, magic plaza |
| 120 | lowgun | kimchig | 13/5/8 | 38 | 85 | semi-member |
| 131 | al3579 | hongkil | 1/0/1 | 0 | 100 | dongam, magic plaza |
| 134 | vouiab | kimsera | 4/1/3 | 25 | 74 | semi-member |
| 135 | sbwkin | minari | 9/8/1 | 88 | 100 | kwacho, magic plaza |
| 136 | mbc724 | yoosooh | 9/1/8 | 11 | 93 | kwacho, magic plaza |

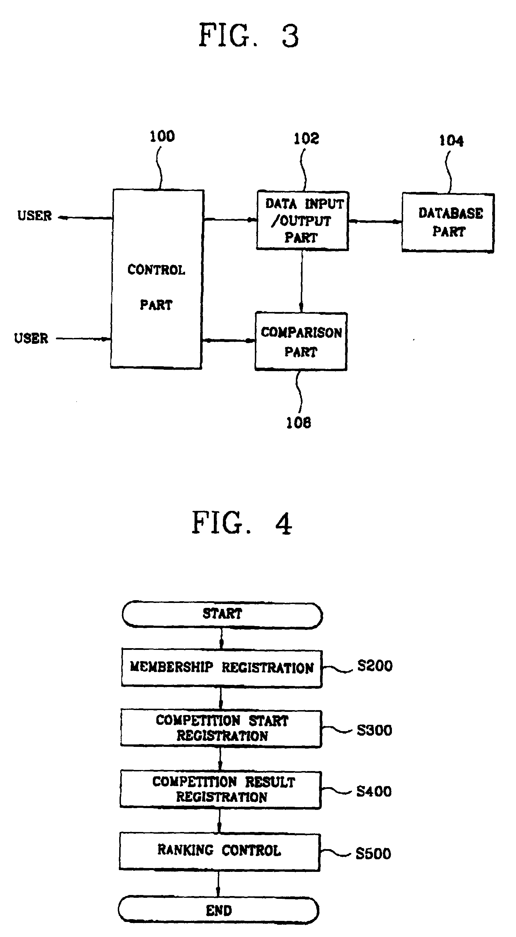

FIG. 3 is a block diagram for showing a structure of a ranking service system for on-line games according to an embodiment of the present invention.

As shown in FIG. 3, a ranking service system for on-line games stores plural gamer data, provides a data readout signal to a database part 104 for outputting a user data signal in response to the data readout signal and responding to a data readout control signal, a data input/output part 102 for outputting a gamer data signal inputted from the database part 104, a comparison part 106 for outputting a comparison signal by comparing a gamer data signal from the data input/output part 102 in response to a data comparison control signal from an external with a data signal from the external, and a control part 100 for outputting to the data input/output part 102 and the comparison part 106 the data readout control signal and the data comparison control signal in response to the data signal inputted by an operation of a gamer, providing the data signal to the comparison part 106, and for outputting to the gamer a result signal indicating the comparison result in response to the comparison signal from the comparison part 106.

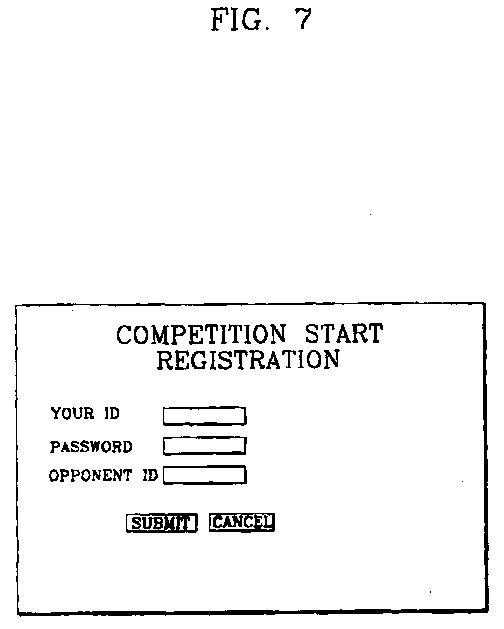

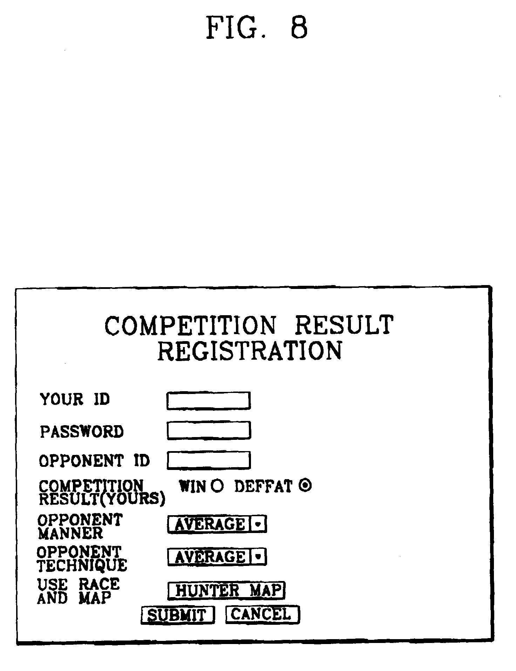

Operations of the ranking service system as stated above will be described in detail with reference to FIG. 7 and FIG. 8.

FIG. 7 is a view for showing a menu display for a competition start registration by using a ranking service system for on-line games according to an embodiment of the present invention, and FIG. 8 is a view for showing a menu display for a competition result registration by using a ranking service system for on-line games according to an embodiment of the present invention. Here, a case of carrying out a competition start registration is illustrated for an example.

First of all, if a data signal such as an ID of his/her own, a password, an opponent ID, and the like which are membership information of his/her own as shown in FIG. 7 by operations of a computer system of a first gamer is inputted, the control part 100 provides the data signal from the first gamer to the comparison part 106, and then the data readout control signal and the data comparison control signal are outputted to the data input/output part 102 and the comparison part 106.

The date input/output part 102, in response to the data readout control signal from the control part 100, applies the data readout signal to the database part 104 in which plural gamer data are stored.

The database part 104 outputs a first gamer data signal corresponding to the data signal from the first gamer in response to the data readout signal, and the data input/output part 102 provides the first gamer data signal from the database part 104 to the comparison part 106.

The comparison part 106 compares the data signal from the first gamer with the first gamer data signal from the database part 104 in response to the data comparison control signal and outputs to the control part 100 a comparison signal indicating whether or not the two data are the same.

The control part 100 outputs a result signal for showing a result to the first gamer in response to the comparison signal from the comparison part 106.

FIG. 4 is a flow chart for explaining a ranking service method for on-line games according to an embodiment of the present invention.

As shown in FIG. 4, a ranking server registers a gamer as a member based on a membership entry request from a gamer(Step S200).

Next, competition start requests from plural gainers are registered in databases corresponding to request gamers, respectively, based on gamer data inputted from the garners registered through the step S200(S300).

Thereafter, a competition result of each of the gamers is registered in each gamer's database based on competition result data from plural gamers which are carried out through the step S300(S400).

The ranking server controls a ranking of each gamer based on the result of the step S400(S500).

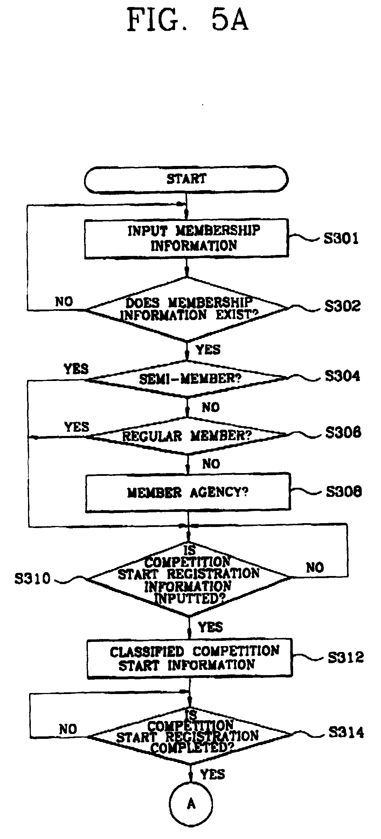

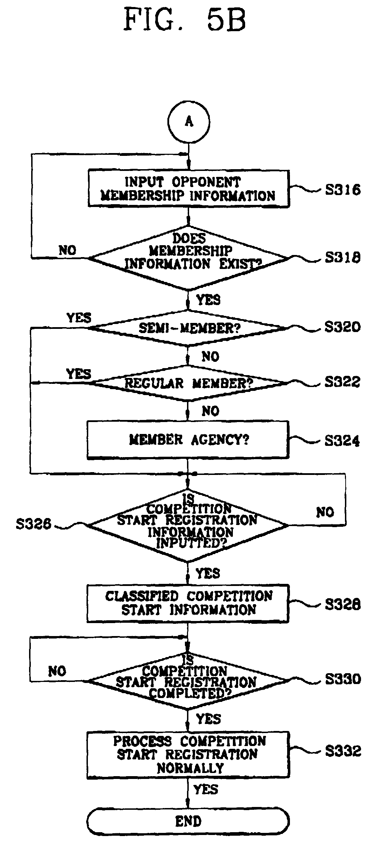

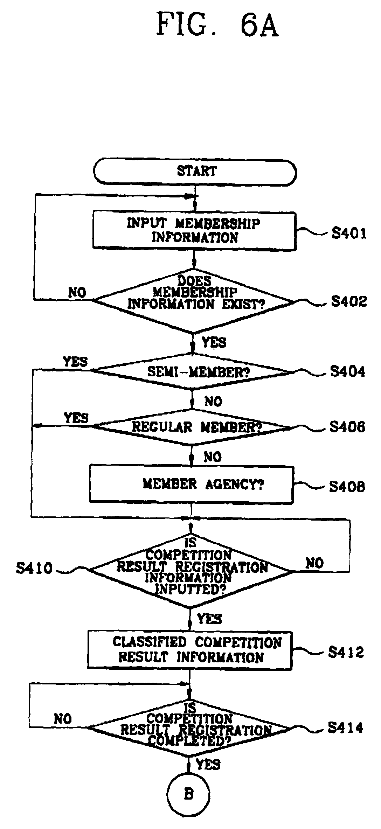

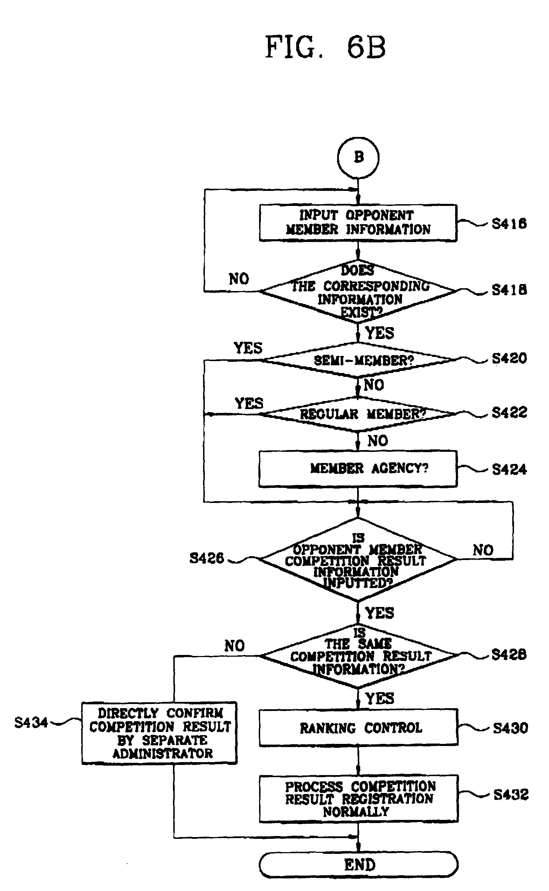

From now on, the competition start registration step(S300) and the competition result registration step(S400) will be described in detail with reference to FIG. 5 and FIG. 6.

FIG. 5a and FIG. 5b are flow charts for explaining a competition start registration steps of a ranking service method for on-line games according to an embodiment of the present invention.

Referring to FIG. 5a, the control part 100 inputs membership information from the first gamer(S301), and judges if the membership information from the first gamer exists in a database(S302).

If the membership information from the first gamer does not exist, the control part 100 returns to step S301, and, if the membership information from the first gamer exists, the control part 100 judges if the first gamer is a semi-member(S304).

If the first gamer is a semi-member, the control part 100 proceeds to the next step, and, if the first gamer is not a semi-member, the control part 100 judges if the first gamer is a regular member(S306).

If the first gamer is a regular member, the control part 100 proceeds to the next step, and, if the first gamer is not a regular member, the control part 100 judges that the first gamer is a member agency(S308).

Next, the control part 100 judges if competition start registration information is inputted from the first gamer as shown in FIG. 7(S310), and, if the competition start registration information is not inputted, the control part 100 repeats the step S310.

If the competition start registration information is inputted, the control part 100 classifies the competition start registration information from the first gamer(S312), and judges if the competition start registration information from the first gamer is completed(S314).

If the competition start registration information from the first gamer is not completed, the control part 100 repeats the step S314.

If the competition start registration information from the first gamer is completed, the control part 100 receives membership information from a second gamer designated by the first gamer(S310).

Next, the control part 100 judges if the membership information from the second gamer exists in the database(S318).

If the membership information from the second gamer does not exist in the database, the control part 100 returns to the step S316.

If the membership information from the second gamer exists in the database, the control part 100 judges if the second gamer is a semi-member(S320).

If the second gamer is a semi-member, the control part 100 proceeds to the next step, and, if the second gamer is not a semi-member, the control part 100 judges if the second gamer is a regular member(S322).

If the second gamer is a regular member, the control part 100 proceeds to the next step, and, if the second gamer is not a regular member, the control part 100 judges that the second gamer is a member agency(S324).

Further, the control part 100 judges if competition start registration information from the second gamer is inputted(S326).

If the competition start registration information from the second gamer is not inputted, the control part 100 repeats the step S326.

If the competition start registration information from the second gamer is inputted, the control part 100 classifies the competition start registration information from the second gamer(S328), and judges if the competition start registration information of the second gamer is completed(S330).

If the competition start registration information of the second gamer is not completed, the control part 100 repeats the step S330, and, if the competition start registration information of the second gamer is completed, the control part 100 normally processes the competition start registration information of the first and second gamers to be stored in the database.

FIG. 6a and FIG. 6b are flow charts for explaining a competition start registration steps of a ranking service method for on-line games according to an embodiment of the present invention.

Referring to FIG. 6a, the control part 100 inputs membership information from the first gamer(S40), and judges if the membership information from the first gamer exists in the database(S402).

If the membership information from the first gamer exists in the database, the control part 100 returns to the step S301, and, if the membership information from the first gamer exists in the database, the control part 100 judges if the first gamer is a semi-member(S404).

If the first gamer is a semi-member, the control part 100 proceeds to the next step, and, if the first gamer is not a semi-member, the control part 100 judges if the first gamer is a regular member(S406).

If the first gamer is a regular member, the control part 100 proceeds to the next step, and, if the first gamer is not a regular member, the control part 100 judges if the first gamer is a member agency(S408).

Next, the control part 100 judges if the competition result registration information is inputted from the first gamer as shown in FIG. 8(S410), and, if the competition result registration information is not inputted, the control part 100 repeats the step S410.

If the competition result registration information is inputted, the control part 100 classifies the competition result registration information from the first gamer(S412), and judges if the competition result registration information of the first gamer is completed(S414).

If the competition result registration information of the first gamer is not completed, the control part 100 repeats the step S414.

If the competition result registration information of the first gamer is completed, the control peril 00 inputs membership information from the second gamer designated by the first gamer(S416).

Next, the control part 100 judges if the membership information of the second gamer exists in the database(S418).

If the membership information of the second gamer does not exist in the database, the control part 100 returns to the step S416.

If the membership information from the second gamer exists in the database, the control part 100 judges if the second gamer is a semi-member(S420).

If the second gamer is a semi-member, the control part 100 proceeds to the next step, and, if the second gamer is not a semi-member, the control part 100 judges if the second gamer is a regular member(S422).

If the second gamer is a regular member, the control part 100 proceeds to the next step, and, if the second gamer is not a regular member, the control part 100 judges that the second gamer is a member agency(S424).

Further, the control part 100 judges if the competition result registration information is inputted from the second gamer(S426).

If the competition result registration information is not inputted from the second gamer, the control part 100 repeats the step S426.

If the competition result registration information from the second gamer is inputted, the control part 100 judges if the competition result registration information from the second gamer is the same as the competition result registration information of the first gamer(S428).

If the competition result registration information of the first gamer is not the same as the competition result registration information of the second gamer, the control part 100 controls the ranking of the first and second gamers based on the competition result registration information from the first and second gamers(S430),

Next, the control part 100 records the controlled ranking and the competition result registration information of the first and second gamers and processes the competition result registration information(S432).

If the competition result registration information of the first gamer is not the same as the one of the second gamer, the control part 100 separately manages the competition result registration information of the first and second gamers(S434).

In the above, the competition result registration information of the first and second gamers is directly confirmed by an administrator of the ranking server and reflected on the ranking of the first and second gamers.//

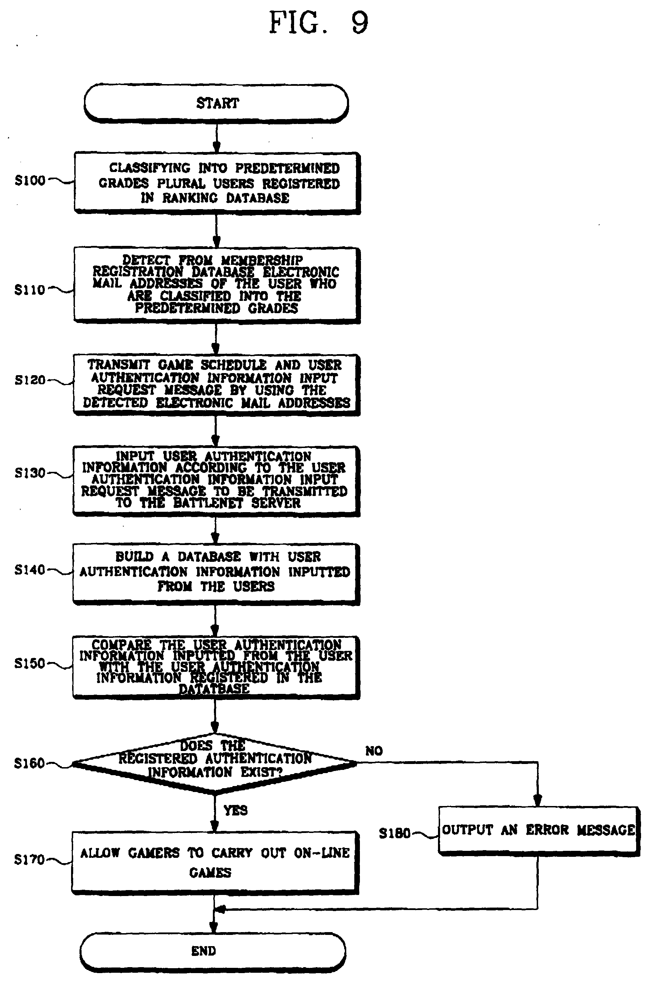

In the meantime, a ranking service system for on-line games according to another embodiment of the present invention will be described with reference to FIG. 9.

The ranking service system according to another embodiment emphasizes that an on-line game is carried out at a place designated by a user who is appointed at the battlenet server for a more precise ranking service to be performed to the user and ranking information occurring as a result is provided to the user.

That is, ranking data which is stored in a ranking database according to operations of a server administrator(not shown) is classified into predetermined grades(S100).

The ranking service system reads from a membership registration database membership information belonging to the classified grades and detects electronic email addresses of members(S110), the ranking service system uses a user computer to transmit to the user computer a message for a schedule and a user authentication information input request for progressing on-line games through the detected electronic email addresses(S120).

The user who received the message undergoes procedures for identifying her/himself in an off-line state to enter a certain place where on-line game system is prepared, the user who underwent an identification procedure in the off-line state enjoys on-line games in a new space, and the battlenet server can decide exact ranking.

Further, the ranking service system does not carry out, in the off-line state as stated above, an authentication procedure of the user who can enjoy the on-line games at the certain place, but can perform it by using a computer system.

That is, an authentication system, for example, a fingerprint recognition system, an eye iris recognition system, and the like, interfaced with the battlenet server is separately prepared, a user inputs a fingerprint of his/her own through the authentication system, and the fingerprint information is transmitted to the battlenet server as user information(S130).

That is, an administrator of the battlenet server requires a user to scan his/her fingerprint, transform the scanned fingerprint in a predetermined file format, and then transmit the file to the battlenet server. If the user scans his/her own fingerprint to be transmitted to the battlenet server according to the request of the battlenet server, the battlenet server builds another database by matching the transmitted scanned fingerprint with user' s login information read from the membership registration database(S140).

The battlenet server receives fingerprint information which is user information transmitted from the authentication system, compares the received fingerprint information with the fingerprint information registered in the database(S150), and judges if there exists the same fingerprint information as a comparison result(S160).

As the judgement result in the step S160, if there exists the same fingerprint information of the user fingerprint information inputted by a user and information registered in the database, a registration of the user is identified, and then the user, actually a gamer, who uses computers installed at a certain place is allowed to carry out a communication connection to the battlenet server(S170).

The garners who carry out communication connections to the battlenet server enjoys on-line games provided from the battlenet server, and the battlenet server can obtain ranking information achieved by the gamers of which authentications are confirmed in the battlenet server.

As the judgement result of the step S160, if there does not exist the same fingerprint information, an error message is outputted to be noticed by a game administrator(S180).

As stated above, according to a ranking service system for on-line games and a method therefor, services such as a chatting room for finding out game levels, present ranking, percentages of victories, and game states of plural gamers, and so on, can be supported game by game,

Accordingly, a competition opponent for a game which a gamer wishes to enjoy can be easily selected. Further, since a game opponent can be selected with reference to a competition state, a percentage of victories, ranking, and so on, a game can be carried out with his/her own level together with an enhanced interest and accomplishment with respect to the game.

Although the preferred embodiment of the present invention has been described, it will be understood by those skilled in the art that the present invention should not be limited to the described preferred embodiment, but various changes and modifications can be made within the spirit and scope of the present invention as defined by the appended claims.

## Claims

1. A ranking service system for on-line games, comprising:
a database part for storing data of plural users and outputting a user data signal corresponding in response to a data readout signal from an external;
a data input/output part for providing the data readout signal to the database part in response to the data readout control signal from the external, and for outputting the user data signal inputted from the database part in response to the data readout signal;
a comparison part for inputting the user data signal from the data input/output part, inputting a data signal from the external, comparing the user data signal with the data signal in response to a data comparison control signal from the external, and for outputting a comparison signal; and
a control part for outputting the data readout control signal and the data comparison control signal to the data input/output part and the comparison part, respectively, in response to the data signal inputted by an operation of the user, applying the date signal to the comparison part, and for outputting a result signal indicating a comparison result to the user in response to the comparison signal of the comparison part.

2. A ranking service method for on-line games, comprising steps of:
(I) registering a user as a member based on a membership entry request from the user;
(ii) registering competition start requests of plural users to user databases, respectively, based on user data inputted from registered users as members;
(iii) registering users' competition results to the user databases, respectively, based on competition result data from the plural users carried out through the step(ii); and
(iv) controlling users' s rankings based on a result of the step(iii).

3. The ranking service method as claimed in claim 2, wherein the step(ii) includes substeps of:
(ii-1) classifying a member grade based on membership information inputted from a first user;
(ii-2) completing the competition start registration of the first user based on whether or not competition start registration information of the first user is inputted;
(ii-3) classifying a member grade based on member information inputted from a second user designated by the competition start registration information inputted by the first user to play a game with the first user; and
(ii-4) judging if a competition start registration of the second user is completed based on whether or not competition start registration information of the second user is inputted and for processing the competition start registration.

4. The ranking service method as claimed in claim 3, wherein the substep(ii-1) includes substeps of:
(a) judging if the membership information inputted from the first user exists in the database;
(b) judging if the first user is a semi-member in case that the membership information exists in the database;
(c) proceeding to the substep(ii-2) if the first user is the semi-member;
(d) judging if the first user is a regular member in case that the first user is not the semi-member;
(e) proceeding to the substep(ii-2) if the first user is the regular member; and
(f) judging that the first user is a member agency in case that the first user is not the regular member.

5. The ranking service method as claimed in claim 3, wherein the substep(ii-2) includes substeps of:
(g) judging if the competition start registration information from the first user is inputted;
(h) repeating the substep(g) if not inputted;
(I) classifying the competition start registration information from the first user if inputted;
(j) judging if the competition start registration of the first user is completed;
(k) repeating the substep(j) if not completed; and
(l) proceeding to the substep(ii-3) if completed.

6. The ranking service method as claimed in claim 3, wherein the substep(ii-3) includes substeps of:
(m) judging if the membership information inputted from the second user exists in the database;
(n) judging if the second user is a semi-member in case that the membership information exists in the database;
(o) proceeding to the substep(ii-4) if the second user is the semi-member;
(p) judging if the second user is a regular member in case that the second user is not the semi-member;
(q) proceeding to the substep(ii-4) if the second user is the regular member; and
(r) judging that the second user is a member agency in case that the second user is not the regular member.

7. The ranking service method as claimed in claim 3, wherein the substep(ii-4) includes substeps of:
(s) judging if the competition start registration information from the second user is inputted;
(t) repeating the substep(s) if not inputted;
(u) classifying the competition start registration information from the second user if inputted;
(v) judging if the competition start registration of the second user is completed;
(w) repeating the substep(v) if not completed; and
(x) proceeding to the substep(iii) if completed.

8. The ranking service method as claimed in claim 2, wherein the step(iii) includes substeps of:
(iii-1) classifying a member grade based on membership information inputted from a first user;
(iii-2) completing a competition result registration of the first user based on whether or not competition result registration information of the first user;
(iii-3) classifying a member grade based on membership information inputted from a second user designated by the competition result registration information inputted by the first user;
(iii-4) judging if the competition result registration information of the first and second users is the same based on whether or not competition result registration information of the second user is inputted;
(iii-5) controlling rankings of the first and second users based on the competition result registration information to be recorded in a database if the competition result registration information inputted from each of the first and second users is the same; and
(iii-6) suspending the record of the competition result registration information of the first and second users into the database, directly confirming and processing the competition result registration information by an administrator, if the competition result registration information inputted from each of the first and second users is not the same.

9. The ranking service method as claimed in claim 8, wherein the substep(iii-1) includes substeps of:
(A) judging if the membership information inputted from the first user exists in the database;
(B) judging if the first user is a semi-member in case that the membership information exists in the database;
(C) proceeding to the substep(iii-2) if the first user is the semi-member;
(D) judging if the first user is a regular member in case that the first user is not the semi-member;
(E) proceeding to the substep(iii-2) if the first user is the regular member; and
(F) judging that the first user is a member agency in case that the first user is not the regular member.

10. The ranking service method as claimed in claim 8, wherein the substep(iii-2) includes substeps of:
(G) judging if the competition start registration information from the first user is inputted;
(H) repeating the substep(G) if not inputted;
(I) classifying the competition start registration information from the first user if inputted;
(J) judging if the competition start registration of the first user is completed;
(K) repeating the substep(J) if not completed; and
(L) proceeding to the substep(iii-3) if completed.

11. The ranking service method as claimed in claim 8, wherein the substep(iii-3) includes substeps of:
(M) judging if the membership information inputted from the second user exists in the database;
(N) judging if the second user is a semi-member in case that the membership information exists in the database;
(O) proceeding to the substep(iii-4) if the second user is the semi-member;
(P) judging if the second user is a regular member in case that the second user is not the semi-member:
(Q) proceeding to the substep(iii-4) if the second user is the regular member; and
(R) judging that the second user is a member agency in case that the second user is not the regular member.

12. The ranking service method as claimed in claim 8, wherein the substep(iii-4) includes substeps of:
(S) judging if the competition result registration information from the second user is inputted;
(T) repeating the substep(S) if not inputted;
(U) judging if the competition result registration information from each of the first and second users is the same, if inputted;
(V) proceeding to the substep(iii-5) if the competition result registration information from the first and second users is the same; and
(W) proceeding to the substep(iii-6) if the competition result registration information from the first and second users is not the same.

13. A ranking service method for on-line games, comprising steps of:
(1) classifying into predetermined grades plural users registered in a ranking database;
(2) detecting from a member registration database electronic mail addresses of the users classified into the predetermined grades;
(3) transmitting a game schedule and user authentication information input request message by using the detected electronic mail addresses;
(4) transmitting to the battlenet server the user authentication information inputted by the users according to the user authentication information input request message;
(5) building a database by using the user authentication information inputted from the users;
(6) comparing the user authentication information inputted by the users with the user authentication information registered in the database; and
(7) allowing the users to carry out on-line games if there exists registered authentication information as the comparison result.

14. The ranking service method as claimed in claim 13, wherein the user authentication information is at least one of user fingerprint intonation and user eye iris information.
